# FASCICULE DE BREVET EUROPEEN

(11) **EP 3 797 881 B1**
(45) Date de publication et mention de la délivrance du brevet: **04.05.2022**
(21) Numéro de dépôt: 20184907.2
(22) Date de dépôt: 09.07.2020
(51) Int. Cl.: B07C 3/02

(54) **INSTALLATION DE TRI DE COLIS DE TYPE COLIS OU PAQUETS COMPRENANT UN CONVOYEUR DE TRI À GODETS**
SORTIERANLAGE FÜR PAKETE VOM TYP PÄCKCHEN ODER PAKETE, DIE EINEN SORTIERFÖRDERER MIT BEHÄLTERN UMFASST
INSTALLATION FOR SORTING PARCELS SUCH AS PARCELS OR PACKAGES COMPRISING A BUCKET SORTING CONVEYOR

(30) Priorité: 30.09.2019 FR 1910823
(43) Date de publication de la demande: 31.03.2021
(73) Titulaire: Solystic, 92220 Bagneux (FR)
(72) Inventeur: RIEU, Jean, 07800 Saint Georges les Bains (FR); BERLIET, Damien, 26500 Bourg les Valence (FR); BEAUGRAND, Wilfrid, 2600 Valence (FR)
(74) Mandataire: Prugneau, Philippe

(56) Documents cités:
- EP-A1- 2 769 776
- WO-A2-01/51223
- DE-A1- 3 530 624

## Description

### Domaine technique

La présente invention concerne une installation de tri de colis de type colis ou paquets comprenant un convoyeur de tri à godets conçus pour convoyer les colis en série selon une certaine direction de convoyage au-dessus d'une pluralité de sorties de tri et un injecteur de colis conçu pour injecter un colis par godet, le convoyeur de tri étant conçu pour trier les colis dans les sorties de tri depuis les godets en fonction d'une information de tri apposée sur chacun des colis Technique antérieure Le volume croissant des petits paquets import (PPI), de tailles, de poids et de formes variés, amplifie le besoin d'équiper les centres de tri avec une seule et même installation de tri capable de trier à haut débit un grand nombre de types de colis. Ce type d'installation de tri est décrit dans le document EP2769776 et comprend un convoyeur de tri à godets, ici des bacs, ainsi qu'un injecteur apte à faire chuter les colis dans les bacs. Chaque bac chargé d'un colis est ensuite convoyé de manière inclinée dans la direction de convoyage au-dessus des sorties de tri. La paroi arrière du bac est ensuite escamotée pour laisser chuter le colis par gravité dans la sortie de tri appropriée.

Les trajectoires d'évacuation des colis dans les sorties de tri peuvent ainsi varier en fonction des dimensions des colis, de l'adhérence des colis avec le bac et de la répartition du poids propre à chaque colis les rendant plus ou moins balourds. Les sorties de tri sont donc prévues suffisamment larges pour autoriser toutes les trajectoires de chute possibles ce qui augmente la surface au sol du convoyeur de tri et in fine le coût de l'installation de tri. De plus, lors de la chute du colis depuis l'injecteur sur le convoyeur de tri, il existe un risque important que le colis chute à côté du bac ou bien qu'il soit mal orienté pour permettre son évacuation dans la sortie de tri appropriée.

De plus, dans l'éventualité où le colis n'est pas évacué dans une sortie de tri, l'installation de tri ne permet pas ici de faire circuler le colis pour une nouvelle passe de tri.

Le document WO-A-01/51223 montre également une installation de tri de colis de type colis ou paquets comprenant un convoyeur de tri à godets.

### Résumé de l'invention

Le but de l'invention est ici de remédier aux problèmes précités.

A cet effet, l'invention a pour objet une installation de tri de colis de type colis ou paquets comprenant un convoyeur de tri à godets conçus pour convoyer les colis en série selon une certaine direction de convoyage au-dessus d'une pluralité de sorties de tri et un injecteur de colis conçu pour injecter un colis par godet, ledit convoyeur de tri étant conçu pour trier les colis dans les sorties de tri depuis les godets en fonction d'une information de tri apposée sur chacun des colis, chaque godet comprenant deux parois latérales et une sole montée pivotante entre les deux parois latérales, ladite sole étant conçue pour pivoter entre une position basse et une position haute, caractérisée en ce que dans la position basse la sole est inclinée vers le bas dans la direction opposée à la direction de convoyage et dans la position haute la sole est redressée à l'horizontal pour venir à fleur du convoyeur injecteur et à fleur de l'extrémité haute des parois latérales, en ce que chaque godet comprend un volet monté pivotant à une extrémité amont de la sole par rapport à la direction de convoyage, ledit volet étant conçu pour pivoter entre une position de blocage dans laquelle le volet est relevé pour retenir un colis sur la sole pendant son déplacement dans la direction de convoyage et une position abaissée dans laquelle le volet est escamoté pour permettre l'évacuation d'un colis par gravité dans une sortie de tri.

L'installation de tri selon l'invention peut présenter en outre les particularités suivantes :
- le volet prolonge la sole dans le plan vers l'amont par rapport à la direction de convoyage dans la position abaissée ;
- chaque godet comprend une rampe d'évacuation en forme de doigts de fourche qui prolongent la sole dans le plan vers l'amont par rapport à la direction de convoyage, le volet étant également en forme de doigts de fourche agencés pour passer entre les doigts de fourche de la rampe d'évacuation pendant le déplacement du volet de la position relevée à la position escamotée ;
- le volet est pivoté de la position redressée à la position abaissée à l'aide d'un ressort ;
- le convoyeur de tri comprend une rampe de redressement profilée qui s'étend dans la direction de convoyage, chaque godet comprenant un levier solidaire au volet qui est destiné à coopérer avec la rampe de redressement lors du déplacement du godet dans la direction de convoyage de sorte que le volet pivote de la position abaissée à la position redressée en fonction du profil de redressement de la rampe ;
- chaque godet comprend un cliquet apte à maintenir le volet en position redressée, le convoyeur de tri comprenant également un actionneur mécanique apte à être actionné sous la commande d'une unité de contrôle-commande en réponse à une information de tri apposée sur un colis à trier dans une sortie de tri pour faire basculer le cliquet et autoriser le pivotement du volet en position abaissée au-dessus de ladite sortie de tri ;
- le convoyeur de tri comprend une rampe de guidage profilée qui s'étend dans la direction de convoyage, ladite sole coopérant avec la rampe de guidage lors du déplacement du godet dans la direction de convoyage afin de pivoter entre la position haute et la position basse en fonction du profil de guidage de la rampe ;
- la sole présente une surface ondulée ;
- l'angle d'inclinaison de la sole en position basse est défini en fonction du coefficient de frottement moyen des colis triés ;
- chaque godet comprend un déflecteur aval incliné qui s'étend sous la sole et entre les deux parois latérales, ledit déflecteur formant avec la sole et les parois latérales du godet adjacent en aval dans la direction de convoyage un goulet d'évacuation de colis ;
- chaque godet comprend un guide d'injection de colis comprenant un plateau flanqué de deux déflecteurs latéraux convergents vers la sole, ledit guide d'injection étant disposé sur une des parois latérales pour venir à fleur de l'injecteur et de la sole en position haute.

### Présentation sommaire des dessins

La présente invention sera mieux comprise et d'autres caractéristiques et avantages apparaîtront à la lecture de la description détaillée des modes de réalisation pris à titre d'exemples nullement limitatifs et illustrés par les dessins annexés dans lesquels :
[Fig.1] La figure 1 représente très schématiquement une installation de tri selon l'invention ;
[Fig.2] La figure 2 montre un injecteur vu de dessus pour injecter des colis sur un convoyeur de tri selon l'invention ;
[Fig.3a] La figure 3a représente un godet selon l'invention sous un certain angle de vue ;
[Fig.3b] La figure 3b représente un godet selon l'invention sous un certain angle de vue ;
[Fig.3c] La figure 3c représente un godet selon l'invention sous un certain angle de vue ;
[Fig.3d] La figure 3d représente un godet selon l'invention sous un certain angle de vue ;
[Fig.4] La figure 4 montre un injecteur vu en perspective pour injecter des colis sur un convoyeur de tri selon l'invention avec des godets se déplaçant dans la direction de convoyage ;
[Fig.5] La figure 5 représente schématiquement une cinétique de pivotement d'une sole d'un godet selon l'invention de la position haute à la position basse ; [Fig.6] La figure 6 représente plusieurs godets avec la sole en position basse et le volet en position redressée pour convoyer les colis de manière inclinée ;
[Fig.7a] La figure 7a représente une étape dans la cinétique d'ouverture du volet d'un godet selon l'invention de la position redressée à la position abaissée ;
[Fig.7b] La figure 7b représente une étape dans la cinétique d'ouverture du volet d'un godet selon l'invention de la position redressée à la position abaissée ;
[Fig.7c] La figure 7c représente une étape dans la cinétique d'ouverture du volet d'un godet selon l'invention de la position redressée à la position abaissée ;
[Fig.7d] La figure 7d représente une étape dans la cinétique d'ouverture du volet d'un godet selon l'invention de la position redressée à la position abaissée ;
[Fig.8] La figure 8 représente un godet selon l'invention vu de côté ;
[Fig.9] La figure 9 est zoom sur le mécanisme de blocage et d'ouverture du volet selon l'invention ;
[Fig.10] La figure 10 représente très schématiquement le principe d'évacuation de colis à balistique quasi-verticale ;
[Fig.11] La figure 11 représente très schématiquement une cinétique de pivotement du volet d'un godet selon l'invention entre la position redressée et la position abaissée.

### Description des modes de réalisation

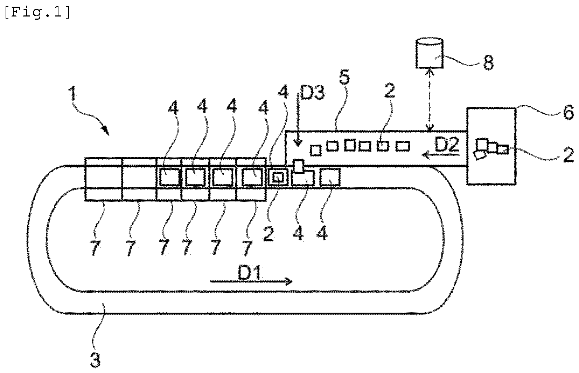

L'installation de tri 1 selon l'invention telle que représentée sur la figure 1 est particulièrement bien adaptée pour trier à haut débit des colis 2 de type colis ou paquets de tailles et de formes diverses, appelés PPI (petits paquets imports). L'installation de tri 1 comprend notamment un convoyeur de tri 3 avec des godets 4 assemblés au pas à la manière d'un train de godets, un injecteur 5 de colis 2 conçu pour injecter les colis 2 dans les godets 4 et une entrée d'alimentation 6 en colis 2 conçue pour alimenter en colis 2 l'injecteur 5. Le convoyeur de tri 3 à godets 4, ici un carrousel à godets, s'étend en boucle fermée selon une certaine direction de convoyage D1 et à vitesse de rotation constante.

Chaque godet 4 est apte à recevoir un colis 2 et à le convoyer jusqu'à une sortie de tri 7 appropriée pour son évacuation.

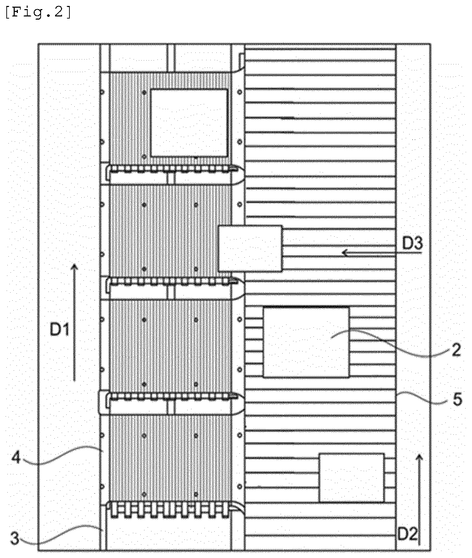

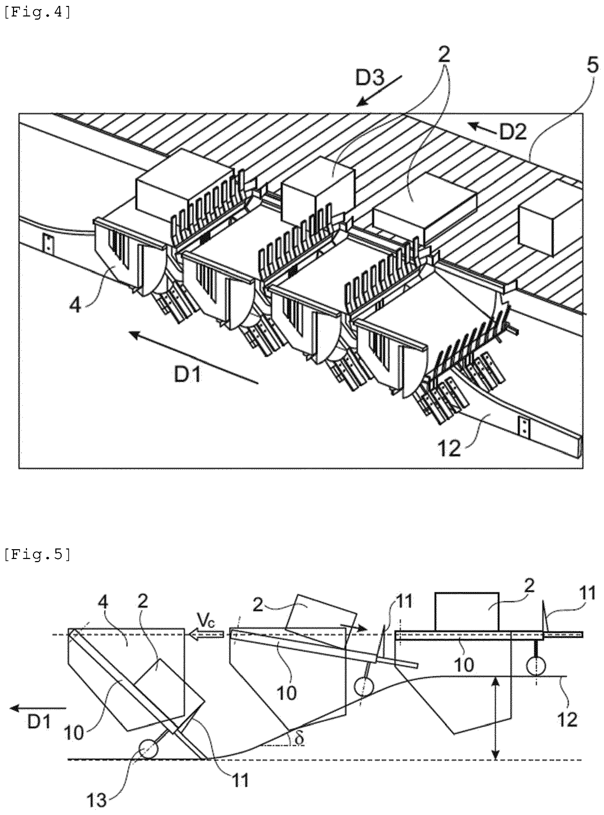

Pour cela, l'installation de tri 1 est équipée d'une unité de contrôle/commande 8 qui comprend en mémoire un plan de tri des colis 2 à répartir dans les différentes sorties de tri 7. L'unité de contrôle/commande 8 est également conçue pour recevoir des informations de tri apposées sur les colis 2 et pour commander en retour leur évacuation dans les sorties de tri 7 appropriées. L'injecteur 5 selon l'invention s'étend quant à lui à fleur du convoyeur de tri 3, comme représenté sur les figures 2 et 4, de sorte à convoyer les colis 2 selon une direction d'acheminement D2 parallèle à la direction de convoyage D1, à vitesse équivalente du convoyeur de tri 3.

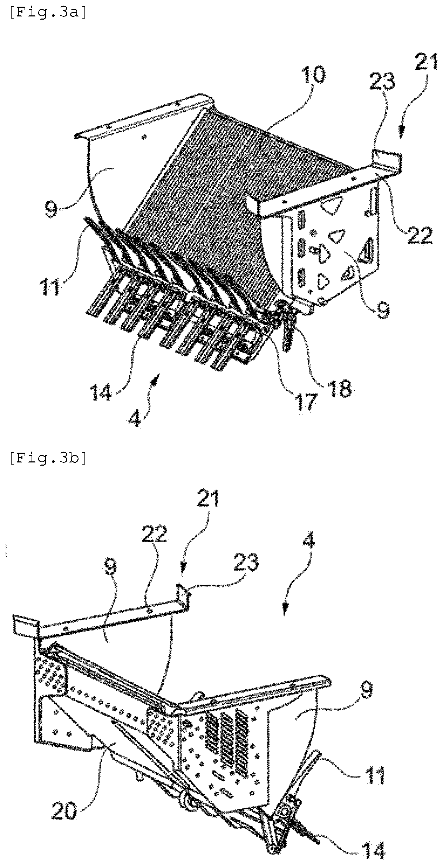

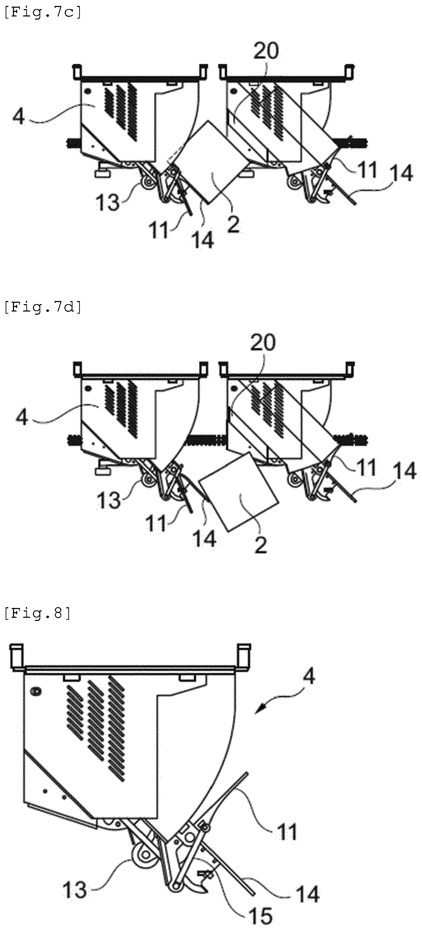

Aussi, pendant le déplacement des colis 2 dans la direction d'acheminement D2, l'injecteur 5 est conçu pour déporter les colis 2 dans une direction d'injection D3 perpendiculaire à la direction d'acheminement D2 et permettre leur injection dans les godets 4. Les godets 4 selon l'invention, représentés sur les figures 3a à 3d et 8, ont des fonctions multiples au sein de l'installation de tri 1 puisqu'ils permettent la bonne réception des colis 2 injectés à plat par l'injecteur 5, le convoyage sécurisé des colis 2 de manière inclinée dans la direction de convoyage D1 et l'évacuation à la verticale des colis 2 dans les sorties de tri 7 appropriées.

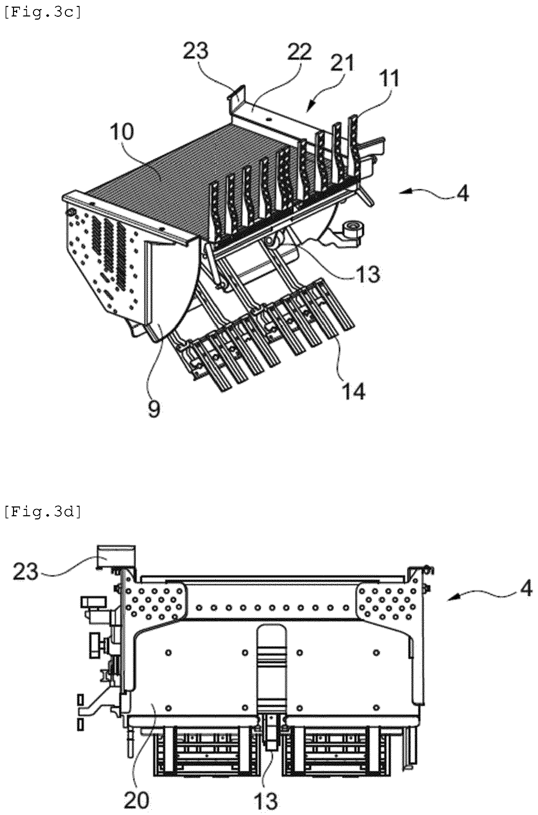

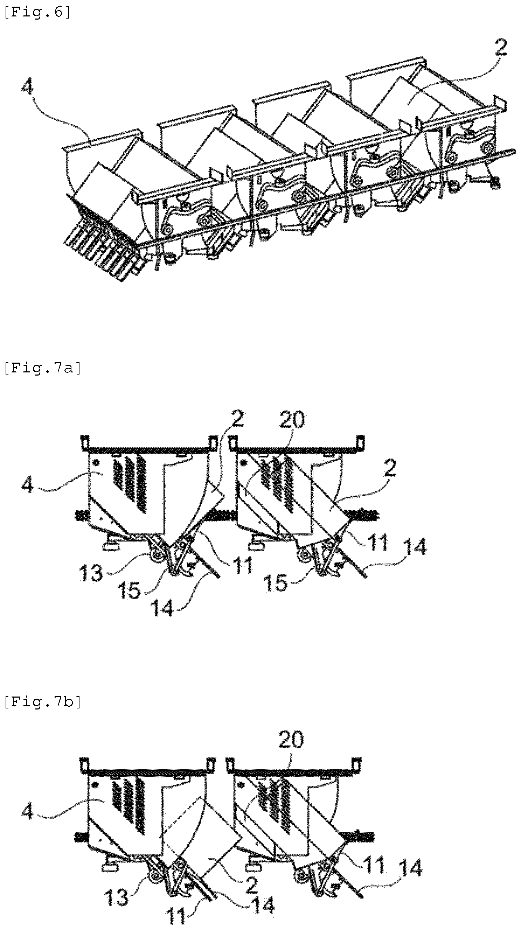

Chaque godet 4 comprend notamment deux parois latérales 9 et une sole 10 montée pivotante entre les deux parois latérales 9. La sole 10 pourra prendre une position haute dans laquelle elle est redressée à l'horizontale pour venir à fleur de l'injecteur 5 et à fleur de l'extrémité haute des parois latérales 9. Dans cette position, l'injecteur 5 peut injecter les colis 2 à plat sur la sole selon une orientation choisie pour une bonne évacuation dans les sorties de tri 7. La sole 10 selon l'invention peut également être pivotée dans une position basse, visible sur la figure 3a, dans laquelle la sole 10 est inclinée vers le bas dans la direction opposée à la direction de convoyage D1. Un volet 11 monté pivotant à une extrémité amont de la sole 10 par rapport à la direction de convoyage D1, ici en position redressée sur les figures 3a à 3c, permet de retenir le colis 2 chargé sur la sole 10 inclinée. La sole 10 inclinée, les parois latérales 9 et le volet 11 en position redressée forment ainsi un réceptacle apte à caler un colis 2 de manière inclinée pendant le déplacement du godet 4 dans la direction de convoyage D1 comme représenté sur la figure 6, que ce soit en ligne droite ou dans les virages du convoyeur de tri 3. De manière avantageuse, le convoyeur de tri 3 comprend également une rampe de guidage 12 profilée, visible sur les figures 4 et 5, qui est conçue pour faire pivoter la sole 10 entre la position haute ou basse. La rampe de guidage 12 s'étend ici dans la direction de convoyage D1 de sorte que la sole 10 coopère avec la rampe de guidage 12 tout ou long du déplacement du godet 4 dans la direction de convoyage D1. La sole 10 comprendra par exemple un galet 13, visible sur les figures 3c et 3d, conçu pour glisser sur la rampe 12 en suivant son profil de hauteur. Pour réaliser l'évacuation du colis 2 dans une sortie de tri 7 déterminée, le volet 11 pivote de la position redressée à une position abaissée dans laquelle le volet 11 est escamoté sous la sole 10 inclinée pour évacuer le colis 2 par gravité dans une sortie de tri 7, comme représenté sur les figures 7a à 7d. Aussi, afin de rendre la chute du colis 2 la plus verticale possible, le volet 11 pourra être pivoté en position abaissée afin de prolonger la sole dans le plan vers l'amont par rapport à la direction de convoyage. En effet, le prolongement de la sole dans le plan permet d'accélérer le colis 2 juste avant sa chute dans le sens contraire à la direction de convoyage D1. A la place du volet pour accélérer la chute du colis 2 dans la sortie de tri, le godet 4 comprendra une rampe d'évacuation 14 fixe. La rampe d'évacuation 14, visible sur les figures 3a et 3e, prend ici une forme de doigts de fourche et prolonge la sole 10 dans le plan vers l'amont par rapport à la direction de convoyage D1.

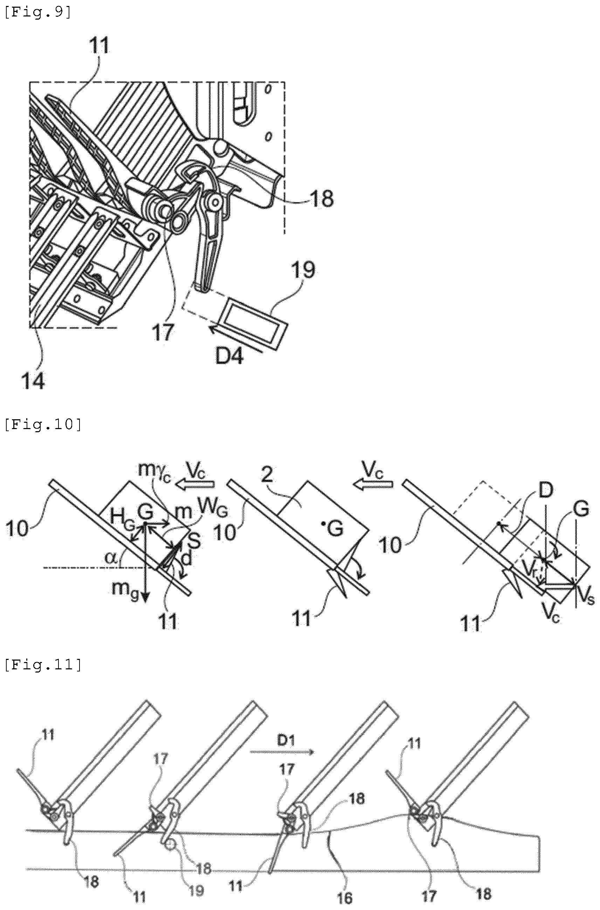

Dans ce cas, le volet 11 sera également en forme de doigts de fourche, comme représenté sur les figures 3a et 3c, de sorte à passer entre les doigts de fourche de la rampe d'évacuation 14 pendant le déplacement du volet 11 de la position relevée à la position abaissée. Il est par ailleurs nécessaire que le volet 11 pivote suffisamment rapidement pour ne pas gêner ou freiner la descente du colis 2 (par exemple en moins de 100 ms), ici par exemple à l'aide d'un ressort 15. On pourra également prévoir une surface de sole 10 ondulée pour diminuer les frottements avec le colis 2 et augmenter la vitesse du colis 2 avant sa chute. A l'ouverture du volet 11, le basculement en chute libre du colis 2 se produit lorsque son centre de gravité parvient à la verticale de l'extrémité des doigts de fourche de la rampe d'évacuation 14. On a représenté sur la figure 10 le principe d'évacuation d'un colis 2 à balistique quasi-verticale. Si γ est l'accélération du colis 2 et D la distance initiale entre le centre de gravité et l'extrémité des doigts de fourche de la rampe d'évacuation 14, la vitesse d'éjection Vₑ du colis 2 au début de son basculement est : Vₑ = √[2γD] La composante horizontale de la vitesse du centre de gravité G en début de chute est alors : Vₕ = V_{c} - Vₑcosα = V_{c} - cosα√[sinα - fcosα] √[19.6D] Où f désigne le coefficient de frottement du colis 2 sur la sole 10 inclinée. Si Vₕ est proche de 0, la vitesse Vᵣ en début de chute du colis 2, est quasi verticale. On en déduit l'angle optimal αₒₚₜ qui varie entre 38° et 51° quand f varie entre 0.1 et 0.5.

Pour f = 0.3 (coefficient de frottement moyen des colis) : αₒₚₜ ≈ 45°. La vitesse Vₑ est d'autant plus élevée que la longueur D est grande. D dépend de la position du centre de gravité du colis 2 (H_{G} et W_{G}) et de la longueur des doigts de fourche de la rampe d'évacuation 14. Dans le cas de petits colis 2, D est peu différente de la longueur des doigts, d'où l'importance de prévoir des doigts de rampe 14 suffisamment longs dans ce cas (par exemple au moins 180 mm). Mais, durant le transport, il existe un risque que le colis 2 bascule autour du sommet S du volet, notamment si le centre de gravité G est très déporté vers l'avant et le haut du colis 2. Si H_{G} et W_{G} désignent respectivement la hauteur du centre de gravité du colis 2 par rapport à sa base et sa distance par rapport au volet de hauteur d, la condition d'équilibre est : H_{G} - W_{G} (1/tanα - γc/g) < d Pour un angle d'inclinaison α voisin de 45° et une accélération de démarrage γc inférieure à 0.5 m/s² le risque est minime avec un volet 11 en position redressée de hauteur d'au moins 150mm. L'installation de tri 1 est également équipée d'un mécanisme de redressement, représenté sur les figures 9 et 11, conçu pour ramener le volet 11 en position redressée.

Le mécanisme de redressement comprend ici une rampe de redressement 16 profilée qui s'étend dans la direction de convoyage D1 et qui coopère avec un levier 17 solidaire au volet 11 lors du déplacement du godet 4 dans la direction de convoyage D1.

Le pivotement du volet 11 de la position abaissée à la position redressée dépendra donc ici du profil de la rampe de redressement 16. On pourra également prévoir un cliquet 18 sur chaque godet 4 afin de maintenir le volet 11 en position redressée.

Un actionneur mécanique 19 (fonctionnant par exemple avec un électroaimant) sera dans ce cas prévu pour faire basculer le cliquet 18 et permettre le pivotement du volet 11 dans la position abaissée. L'actionneur sera ici déplacé dans la direction D4 transversalement à la direction de convoyage D1 comme visible sur la figure 9. Le déplacement de l'actionneur mécanique 19 dans la direction D4 est ici contrôlé par l'unité de contrôle/commande 8 en réponse à une information de tri d'un colis 2 devant être évacué dans une sortie de tri 7 située à la verticale du godet 4. Chaque godet 4 pourra également comprendre un déflecteur 20 aval incliné, visible sur les figures 3b et 3d et 7a à 7d, s'étendant sous la sole 10 et entre les deux parois latérales 9. Ce déflecteur 20 est agencé de manière à former, avec la sole 10 et les parois latérales 9 du godet 4 adjacent en aval dans la direction de convoyage D1, un goulet d'évacuation de colis 2, comme visible sur les figures 7a à 7d. Le déflecteur 20 permet notamment d'éviter la chute d'un colis 2 dans une sortie de tri 7 non appropriée en empêchant le basculement de colis 2 par-dessus le volet 11 lorsqu'il est en position redressé. De manière avantageuse, l'extrémité haute d'une des parois latérales 9 de chaque godet 4 est munie d'un guide d'injection 21 de colis, visible sur les figures 3a à 3d, formé d'un plateau 22 flanqué de deux déflecteurs 23 latéraux convergents vers la sole 10. Le guide d'injection 21 est ici agencé pour venir à fleur de l'injecteur 5 et de la sole 10 en position haute. Les étapes de tri de colis 2 avec l'installation de tri 1 selon l'invention sont décrites ci-après. Les colis 2 sont chargés en vrac dans l'entrée d'alimentation 6 qui introduit en série les colis 2 sur l'injecteur 5, comme représenté sur la figure 1. Les colis 2 sont ensuite convoyés en série dans la direction d'acheminement D2 en parallèle du convoyeur de tri 3 puis sont injectés un par un sur une sole 10 en position haute. Comme visible sur la figure 4, le colis 2 est guidé par les déflecteurs 23 latéraux du dispositif de guidage 21 pendant son injection sur la sole 10. La sole 10 chargée du colis 2 est ensuite directement pivotée en position basse, comme représenté en figure 5 de sorte à faire glisser le colis 2 vers le volet 11 en position redressée. Le colis 2 est ensuite convoyé au-dessus de la sortie de tri 7 choisie par l'unité de contrôle 8 commande. L'unité de contrôle/commande 8 commande alors l'actionneur mécanique 19, qui libère le volet 11 de l'emprise du cliquet 18. Le volet 11 bascule alors en position abaissée pour libérer le colis 2 dans la sortie de tri 7. Le volet 11 et la sole 10 sont ensuite respectivement pivotés en position redressée et position haute. Le godet 4 fait ensuite un tour de carrousel pour revenir à fleur de l'injecteur 5 et procéder à un nouveau chargement de colis 2.

## Revendications

1. Installation de tri (1) de colis (2) de type colis ou paquets comprenant un convoyeur de tri (3) à godets (4) conçus pour convoyer les colis en série selon une certaine direction de convoyage (D1) au-dessus d'une pluralité de sorties de tri (7) et un injecteur (5) de colis conçu pour injecter un colis par godet, ledit convoyeur de tri étant conçu pour trier les colis dans les sorties de tri depuis les godets en fonction d'une information de tri apposée sur chacun des colis, chaque godet comprenant deux parois latérales (9) et une sole (10) montée pivotante entre les deux parois latérales, ladite sole étant conçue pour pivoter entre une position basse et une position haute, **caractérisée en ce que** dans la position basse la sole est inclinée vers le bas dans la direction opposée à la direction de convoyage et dans la position haute la sole est redressée à l'horizontal pour venir à fleur du convoyeur injecteur et à fleur de l'extrémité haute des parois latérales, **en ce que** chaque godet comprend un volet (11) monté pivotant à une extrémité amont de la sole par rapport à la direction de convoyage, ledit volet étant conçu pour pivoter entre une position de blocage dans laquelle le volet est relevé pour retenir un colis sur la sole pendant son déplacement dans la direction de convoyage et une position abaissée dans laquelle le volet est escamoté pour permettre l'évacuation d'un colis par gravité dans une sortie de tri.

2. Installation de tri selon la revendication 1, **caractérisée en ce que** le volet prolonge la sole dans le plan vers l'amont par rapport à la direction de convoyage dans la position abaissée.

3. Installation de tri selon la revendication 1, **caractérisée en ce que** chaque godet comprend une rampe d'évacuation (14) en forme de doigts de fourche qui prolongent la sole dans le plan vers l'amont par rapport à la direction de convoyage et **en ce que** le volet est également en forme de doigts de fourche agencés pour passer entre les doigts de fourche de la rampe d'évacuation pendant le déplacement du volet de la position relevée à la position escamotée.

4. Installation de tri selon l'une des revendications 1 à 3, **caractérisée en ce que** le volet est pivoté de la position redressée à la position abaissée à l'aide d'un ressort (15).

5. Installation de tri selon l'une quelconque des revendications 1 à 4, **caractérisée en ce que** le convoyeur de tri comprend une rampe de redressement (16) profilée qui s'étend dans la direction de convoyage, et **en ce que** chaque godet comprend un levier (17) solidaire au volet qui est destiné à coopérer avec la rampe de redressement lors du déplacement du godet dans la direction de convoyage de sorte que le volet pivote de la position abaissée à la position redressée en fonction du profil de redressement de la rampe.

6. Installation de tri selon l'une quelconque des revendications 1 à 5, **caractérisée en ce que** chaque godet comprend un cliquet (18) apte à maintenir le volet en position redressée, et **en ce que** le convoyeur de tri comprend un actionneur mécanique (19) apte à être actionné sous la commande d'une unité de contrôle-commande (8) en réponse à une information de tri apposée sur un colis à trier dans une sortie de tri pour faire basculer le cliquet et autoriser le pivotement du volet en position abaissée au-dessus de ladite sortie de tri.

7. Installation de tri selon l'une quelconque des revendications 1 à 6, **caractérisée en ce que** le convoyeur de tri comprend une rampe de guidage (12) profilée qui s'étend dans la direction de convoyage, ladite sole coopérant avec la rampe de guidage lors du déplacement du godet dans la direction de convoyage afin de pivoter entre la position haute et la position basse en fonction du profil de guidage de la rampe.

8. Installation de tri selon l'une quelconque des revendications 1 à 7, **caractérisée en ce que** la sole présente une surface ondulée.

9. Installation de tri selon l'une quelconque des revendications 1 à 8, **caractérisée en ce que** l'angle d'inclinaison de la sole en position basse est défini en fonction du coefficient de frottement moyen des colis triés.

10. Installation de tri selon l'une quelconque des revendications 1 à 9, **caractérisée en ce que** chaque godet comprend un déflecteur (20) aval incliné qui s'étend sous la sole et entre les deux parois latérales, ledit déflecteur formant avec la sole et les parois latérales du godet adjacent en aval dans la direction de convoyage un goulet d'évacuation de colis.

11. Installation de tri selon l'une quelconque des revendications 1 à 10, **caractérisée en ce que** chaque godet comprend un guide d'injection (21) de colis comprenant un plateau (22) flanqué de deux déflecteurs (23) latéraux convergents vers la sole, ledit guide d'injection étant disposé sur une des parois latérales pour venir à fleur de l'injecteur et de la sole en position haute.

## Patentansprüche

1. Anlage zum Sortieren (1) von Paketen (2) einer Paket- oder Päckchenart, die einen Sortierförderer (3) mit Schaufeln (4), die dazu ausgelegt sind, die Pakete in Reihe entlang einer bestimmten Förderrichtung (D1) über mehrere Sortierausgänge (7) zu fördern, und einen Paketzuführer (5) umfasst, der dazu ausgelegt ist, ein Paket pro Schaufel zuzuführen, wobei der Sortierförderer dazu ausgelegt ist, die Pakete in den Sortierausgängen von den Schaufeln in Abhängigkeit von Sortierinformationen, die an jedem der Pakete angebracht sind, zu sortieren, wobei jede Schaufel zwei Seitenwände (9) und einen Boden (10) umfasst, der zwischen den zwei Seitenwänden schwenkbar montiert ist, wobei der Boden dazu ausgelegt ist, zwischen einer unteren Position und einer oberen Position zu schwenken, **dadurch gekennzeichnet, dass** in der unteren Position der Boden in der entgegengesetzten Richtung zu der Förderrichtung nach unten geneigt ist und in der oberen Position der Boden horizontal aufgerichtet ist, um bündig mit dem Zuführförderer und bündig mit dem oberen Ende der Seitenwände zu sein, dass jede Schaufel eine Klappe (11) umfasst, die an einem stromaufwärtigen Ende des Bodens relativ zu der Förderrichtung schwenkbar montiert ist, wobei die Klappe dazu ausgelegt ist, zwischen einer Sperrposition, in der die Klappe angehoben ist, um ein Paket auf dem Boden während seiner Bewegung in Förderrichtung zurückzuhalten, und einer abgesenkten Position zu schwenken, in der die Klappe eingezogen ist, um das Abführen eines Pakets durch Schwerkraft in einen Sortierausgang zu ermöglichen.

2. Sortieranlage nach Anspruch 1, **dadurch gekennzeichnet, dass** die Klappe in der abgesenkten Position den Boden in der Ebene relativ zu der Förderrichtung stromaufwärts verlängert.

3. Sortieranlage nach Anspruch 1, **dadurch gekennzeichnet, dass** jede Schaufel eine Abfuhrrampe (14) in Form von Gabelzinken umfasst, die den Boden in der Ebene relativ zu der Förderrichtung stromaufwärts verlängern, und dass die Klappe ebenfalls in Form von Gabelzinken ausgebildet ist, die eingerichtet sind, um während der Bewegung der Klappe von der angehobenen Position in die eingezogene Position zwischen den Gabelzinken der Abfuhrrampe hindurchzugehen.

4. Sortieranlage nach einem der Ansprüche 1 bis 3, **dadurch gekennzeichnet, dass** die Klappe mithilfe einer Feder (15) von der aufgerichteten Position in die abgesenkte Position geschwenkt wird.

5. Sortieranlage nach einem der Ansprüche 1 bis 4, **dadurch gekennzeichnet, dass** der Sortierförderer eine profilierte Aufrichtrampe (16) umfasst, die sich in Förderrichtung erstreckt, und dass jede Schaufel einen fest mit der Klappe verbundenen Hebel (17) umfasst, der dazu bestimmt ist, bei der Bewegung der Schaufel in Förderrichtung mit der Aufrichtrampe zusammenzuwirken, so dass die Klappe in Abhängigkeit von dem Aufrichtprofil der Rampe von der abgesenkten Position in die aufgerichtete Position schwenkt.

6. Sortieranlage nach einem der Ansprüche 1 bis 5, **dadurch gekennzeichnet, dass** jede Schaufel eine Klinke (18) umfasst, die geeignet ist, die Klappe in einer aufgerichteten Position zu halten, und dass der Sortierförderer eine mechanische Betätigungsvorrichtung (19) umfasst, die geeignet ist, unter der Steuerung einer Steuer- und Regeleinheit (8) als Reaktion auf Sortierinformationen, die an einem in einem Sortierausgang zu sortierenden Paket angebracht sind, betätigt zu werden, um die Klinke zu kippen und das Schwenken der Klappe in eine abgesenkte Position über dem Sortierausgang zuzulassen.

7. Sortieranlage nach einem der Ansprüche 1 bis 6, **dadurch gekennzeichnet, dass** der Sortierförderer eine profilierte Führungsrampe (12) umfasst, die sich in Förderrichtung erstreckt, wobei der Boden bei der Bewegung der Schaufel in Förderrichtung mit der Führungsrampe zusammenwirkt, um zwischen der oberen und der unteren Position in Abhängigkeit von dem Führungsprofil der Rampe zu schwenken.

8. Sortieranlage nach einem der Ansprüche 1 bis 7, **dadurch gekennzeichnet, dass** der Boden eine gewellte Oberfläche vorweist.

9. Sortieranlage nach einem der Ansprüche 1 bis 8, **dadurch gekennzeichnet, dass** der Neigungswinkel des Bodens in der unteren Position in Abhängigkeit von dem mittleren Reibungskoeffizienten der sortierten Pakete definiert wird.

10. Sortieranlage nach einem der Ansprüche 1 bis 9, **dadurch gekennzeichnet, dass** jede Schaufel eine geneigte stromabwärtige Ablenkplatte (20) umfasst, die sich unter dem Boden und zwischen den zwei Seitenwänden erstreckt, wobei die Ablenkplatte mit dem Boden und den Seitenwänden der in Förderrichtung stromabwärtigen benachbarten Schaufel einen Paketabfuhrengpass ausbildet.

11. Sortieranlage nach einem der Ansprüche 1 bis 10, **dadurch gekennzeichnet, dass** jede Schaufel eine Paketzuführführung (21) umfasst, die eine Platte (22) umfasst, die von zwei seitlichen Ablenkplatten (23) flankiert wird, die zu dem Boden hin zusammenlaufen, wobei die Zuführführung an einer der Seitenwände angeordnet ist, um in der oberen Position mit dem Zuführer und dem Boden bündig zu sein.

## Claims

1. Facility (1) for sorting parcels (2) or packages, comprising a sorting conveyor (3) having buckets (4) which are designed to convey the parcels in series in a certain conveying direction (D1) above a plurality of sorting outlets (7), and a parcel injector (5) which is designed to inject one parcel per bucket, said sorting conveyor being designed to sort the parcels into the sorting outlets from the buckets on the basis of sorting information affixed to each of the parcels, each bucket comprising two side walls (9) and a floor (10) which is pivotally mounted between the two side walls, said floor being designed to pivot between a low position and a high position, **characterized in that** in the low position the floor is tilted downward in the direction opposite the conveying direction and in the high position the floor is raised horizontally in order to be flush with the injector conveyor and flush with the upper end of the side walls, **in that** each bucket comprises a flap (11) which is pivotally mounted at an upstream end of the floor with respect to the conveying direction, said flap being designed to pivot between a locking position in which the flap is raised to retain a parcel on the floor during its movement in the conveying direction and a lowered position in which the flap is retracted to allow a parcel to be discharged by gravity into a sorting outlet.

2. Sorting facility according to claim 1, **characterized in that**, in the lowered position, the flap extends the floor in the plane upstream with respect to the conveying direction.

3. Sorting facility according to claim 1, **characterized in that** each bucket comprises a discharge ramp (14) in the form of fork fingers which extend the floor in the plane upstream with respect to the conveying direction, and **in that** the flap is also in the form of fork fingers which are arranged to pass between the fork fingers of the discharge ramp when the flap is moved from the raised position to the retracted position.

4. Sorting facility according to any of claims 1 to 3, **characterized in that** the flap is pivoted from the raised position to the lowered position by means of a spring (15).

5. Sorting facility according to any of claims 1 to 4, **characterized in that** the sorting conveyor comprises a profiled raised ramp (16) which extends in the conveying direction, and **in that** each bucket comprises a lever (17) which is secured to the flap that is intended to engage with the raised ramp when the bucket moves in the conveying direction such that the flap pivots from the lowered position to the raised position on the basis of the raised profile of the ramp.

6. Sorting facility according to any of claims 1 to 5, **characterized in that** each bucket comprises a latch (18) which is capable of holding the flap in the raised position, and **in that** the sorting conveyor comprises a mechanical actuator (19) which is capable of being actuated under the command of a control-command unit (8) in response to sorting information affixed to a parcel to be sorted into a sorting outlet so as to tilt the latch and authorize the flap to be pivoted into the lowered position above said sorting outlet.

7. Sorting facility according to any of claims 1 to 6, **characterized in that** the sorting conveyor comprises a profiled guide ramp (12) which extends in the conveying direction, said floor engaging with the guide ramp when the bucket is moved in the conveying direction in order to pivot between the high position and the low position on the basis of the guide profile of the ramp.

8. Sorting facility according to any of claims 1 to 7, **characterized in that** the floor has a corrugated surface.

9. Sorting facility according to any of claims 1 to 8, **characterized in that** the inclination angle of the floor in the low position is defined on the basis of the average fiction coefficient of the sorted parcels.

10. Sorting facility according to any of claims 1 to 9, **characterized in that** each bucket comprises an inclined downstream deflector (20) which extends under the floor and between the two side walls, said deflector, together with the floor and the side walls of the adjacent bucket downstream in the conveying direction, forming a parcel discharge chute.

11. Sorting facility according to any of claims 1 to 10, **characterized in that** each bucket comprises a parcel injection guide (21) comprising a plate (22) which is flanked by two side deflectors (23) that converge toward the floor, said injection guide being arranged on one of the side walls in order to be flush with the injector and the floor in the high position.
